# FASCICULE DE BREVET EUROPEEN

(11) **EP 1 056 957 B1**
(45) Date de publication et mention de la délivrance du brevet: **01.06.2005**
(21) Numéro de dépôt: 99961116.3
(22) Date de dépôt: 20.12.1999
(51) Int. Cl.: F16D 23/02

(54) **BAGUE DE SYNCHRONISATION POUR UN SYNCHRONISEUR DE BOITE DE VITESSES, ET PROCEDE DE FABRICATION DU CORPS EN TOLE D'UNE TELLE BAGUE**
SYNCHRORING FÜR SYNCHRONISIEREINRICHTUNG EINES GETRIEBES, UND VERFAHREN ZUR HERSTLLUNG SOLCH EINES RINGES AUS EINEM STÜCK BLECH
SYNCHRONIZER RING FOR GEARBOX SYNCRHONIZER AND METHOD FOR MAKING THE METAL SHEET BODY OF SUCH A RING

(30) Priorité: 21.12.1998 FR 9816095
(43) Date de publication de la demande: 06.12.2000
(73) Titulaire: Valeo Matériaux de Friction, 87020 Limoges cedex 9 (FR)
(72) Inventeur: DUNO, Erick, F-87100 Limoges (FR); BOULE, Philippe, F-87570 Rilhac-Rancon (FR)
(74) Mandataire: Lemaire, Marc
(86) Numéro de dépôt international: PCT/FR1999/003210
(87) Numéro de publication internationale: WO 2000/037816

(56) Documents cités:
- EP-A- 0 159 080
- EP-A- 0 565 225
- DE-A- 19 713 304
- FR-A- 2 582 769
- FR-A- 2 751 712
- US-A- 4 013 153
- US-A- 5 152 061

## Description

La présente invention concerne une bague de synchronisation pour un synchroniseur de boîte de vitesses.

L'invention concerne aussi un procédé de fabrication du corps annulaire tronconique d'une telle bague de synchronisation.

Dans une boîte de vitesses à rapports multiples, lors du passage des vitesses, le synchronisme nécessaire entre le manchon baladeur, qui tourne à la vitesse de l'arbre de sortie, et le pignon correspondant est réalisé par un système de synchronisation à friction ou frottement.

Selon un exemple connu d'une conception d'un dispositif de synchronisation, celui-ci est équipé d'un moyeu ou manchon qui est relié par des cannelures à l'arbre secondaire. Sur ce moyeu peut coulisser axialement le baladeur. De chaque côté, le moyeu est pourvu d'une bague de synchronisation comportant par exemple un cône intérieur de frottement. Le cône de la bague et le cône extérieur complémentaire du pignon forment ensemble un accouplement conique qui produit, par friction/frottement, le synchronisme, c'est-à-dire l'entraînement en rotation du pignon fou en vue de l'engagement de la vitesse correspondante.

Les dentures et les surfaces de friction des engrenages sont en acier traité, ces dernières sont en général recouvertes de molybdène ou d'un alliage fritté. Selon une conception connue des bagues de synchronisation, elles sont réalisées sous la forme d'éléments massifs métalliques et usinés, les cônes intérieurs et les anneaux étant par exemple en bronze, en alliage d'aluminium ou en acier fritté.

Cette conception d'une bague de synchronisation massive en une seule pièce présente plusieurs inconvénients.

Tout d'abord, chaque bague est d'un poids et d'une inertie relativement élevés.

La fabrication des bagues par usinage fait appel à de nombreuses étapes de reprises d'usinage et est donc particulièrement longue et coûteuse.

Enfin, la rigidité nécessaire de chaque bague de synchronisation ne permet pas d'en réduire les dimensions et la masse.

Afin de remédier à ces inconvénients, il a été proposé dans le document FR-A-2.751.712 une bague de synchronisation pour un synchroniseur de boîte de vitesses du type comportant un corps de forme générale annulaire tronconique, réalisé par formage d'un flan de tôle, qui délimite au moins une surface de portée tronconique susceptible de coopérer par friction avec une surface de portée complémentaire appartenant à un autre composant, et qui est délimité axialement par deux bords d'extrémités, par une face latérale conique externe et par une face latérale conique interne.

Ce document propose notamment que le corps annulaire tronconique soit réalisé par découpe, emboutissage et/ou repoussage d'un flan de tôle d'acier.

Le document US-A- 5,152,061 divulgue un procédé de formage à froid d'une roue dentée métallique comprenant des étapes succesives de déformation du métal pour obtenir la forme souhaitée.

La présente invention a pour but de proposer un perfectionnement d'une telle conception d'une bague de synchronisation qui permet notamment d'en accroître la rigidité tout en conservant les avantages inhérents aux bagues obtenues selon la technique de l'emboutissage.

Dans ce but l'invention propose une bague de synchronisation caractérisée en ce que le corps annulaire tronconique comporte une double épaisseur de tôle constituée d'un anneau radialement extérieur et d'un anneau radialement intérieur concentriques qui sont reliés ente eux par un pli d'extrémité axiale, et en ce que la face latérale conique externe du corps est la face latérale externe de l'anneau extérieur, tandis que la face latérale conique interne du corps est la face latérale interne conique de l'anneau intérieur.

Selon d'autres caractéristiques de l'invention :
- les deux anneaux extérieur et intérieur sont reliés entre eux par un pli qui définit le bord d'extrémité axiale de plus petit diamètre du corps annulaire tronconique ;
- le corps annulaire tronconique comporte au moins une partie fonctionnelle supplémentaire, réalisée venue de matière par formage, qui s'étend depuis l'un de ses bords d'extrémités axiales ;
- la partie fonctionnelle est une patte d'orientation sensiblement axiale ;
- la patte s'étend axialement sensiblement le long de la face latérale tronconique externe du corps pour constituer un bossage, d'appui et de positionnement axial de la bague ;
- la patte s'étend axialement depuis le bord d'extrémité axiale de plus grand diamètre de l'anneau extérieur du corps annulaire tronconique ;
- la surface de portée tronconique appartient à une couche de matériau, notamment de matériau de frottement, rapportée sur le corps annulaire tronconique ;
- le corps délimite au moins une face latérale tronconique qui est revêtue d'une couche de matériau, d'épaisseur sensiblement constante ;
- une face latérale tronconique interne de l'anneau intérieur du corps est revêtue d'une couche de matériau ;
- la couche de matériau est réalisée par surmoulage autour du corps en tôle ;
- la surface de portée comporte une série de rainures, d'orientation sensiblement axiale, formées par moulage dans l'épaisseur de la couche de matériau ;
- la partie fonctionnelle est une collerette d'orientation sensiblement radiale ;
- la collerette s'étend radialement vers l'extérieur et comporte des dents à sa périphérie ;
- la collerette s'étend radialement vers l'extérieur depuis le bord d'extrémité axiale de plus grand diamètre de l'anneau extérieur du corps annulaire tronconique ;
- la couche de matériau est une couche de matériau moulable de frottement susceptible de coopérer avec une surface de frottement en milieu liquide ;
- une couche d'adhésif ou de colle est interposée entre le corps annulaire tronconique et la couche de matériau.

L'invention propose aussi un procédé de fabrication du corps annulaire tronconique d'une bague de synchronisation selon l'invention caractérisé en ce qu'il comporte une première étape a) d'obtention d'un flan de tôle sensiblement plan et de contour extérieur circulaire, et au moins une deuxième étape b) d'emboutissage, selon la direction axiale du corps, au cours de laquelle on forme simultanément les deux anneaux intérieur et extérieur concentriques et le pli d'extrémité axiale qui les relie.

Selon d'autres caractéristiques de l'invention :
- la deuxième étape b) peut comporter plusieurs passes successives d'emboutissage ;
- le procédé comporte au moins une troisième étape c) de mise en forme d'une face latérale tronconique du corps annulaire tronconique ;
- la troisième étape c) est une étape de mise en forme de la face latérale tronconique externe du corps annulaire tronconique ;
- au cours de la troisième étape c), on met en forme simultanément une face transversale d'extrémité axiale du corps annulaire tronconique ;
- le procédé comporte une quatrième étape d) de mise en forme de l'autre face latérale tronconique du corps annulaire tronconique ;
- la quatrième étape d) est une étape de mise en forme de la face latérale tronconique interne du corps annulaire tronconique ;
- le flan de tôle est un disque et, au cours de la quatrième étape d), on découpe simultanément la partie centrale du disque ;
- à l'issue de la deuxième étape b), le corps annulaire tronconique comporte une collerette qui s'étend radialement vers l'extérieur à partir du bord d'extrémité axiale libre de l'anneau extérieur ;
- le procédé comporte au moins une étape e) de réalisation de ladite patte comportant une opération de découpe de ladite collerette ;
- l'étape e) de réalisation de ladite patte comporte une opération de pliage de ladite patte au cours de laquelle on replie la portion correspondante de la collerette en direction de la face latérale externe de l'anneau extérieur ;
- l'étape e) de réalisation de ladite patte comporte une opération d'emboutissage de ladite patte ;
- l'étape e) de réalisation de ladite patte est postérieure à l'étape c), d) de mise en forme de la face latérale externe du corps annulaire tronconique ;
- l'étape postérieure e) est une cinquième étape ;
- le procédé comporte au moins une étape f) g) de mise en forme d'une face latérale externe du corps annulaire tronconique postérieure à l'étape e) de réalisation de ladite patte.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective de trois-quarts avant d'un exemple de réalisation d'une conception d'une bague de synchronisation selon l'état de la technique constitué par le document FR-A-2.751.712;
- la figure 2 est une vue en perspective, de trois-quarts arrière d'un premier exemple de réalisation d'une bague de synchronisation conforme aux enseignements de l'invention ;
- les figures 3A à 3G sont des vues en section par un plan axial, selon la ligne 3-3 de la figure 5 qui illustrent les différentes étapes de la fabrication de la bague de synchronisation de la figure 2 selon un premier procédé conforme aux enseignements de l'invention ;
- les figures 4B à 4G sont des vues de détail à plus grande échelle des parties inférieures des figures 3B à 3G ;
- la figure 5 est une vue en bout d'extrémité avant de la bague de la figure 2 ;
- les figures 6, 7A à 7G, et 8B à 8G et 9 sont des vues similaires à celles des figures 2, 3A à 3G, 4B à 4G et 5 et qui sont relatives à un second exemple de réalisation d'une bague de synchronisation conforme aux enseignements de l'invention et à un second procédé de réalisation conforme aux enseignements de l'invention.

Dans la description qui va suivre, des éléments et composants identiques, similaires ou analogues seront désignés par les mêmes chiffres de référence.

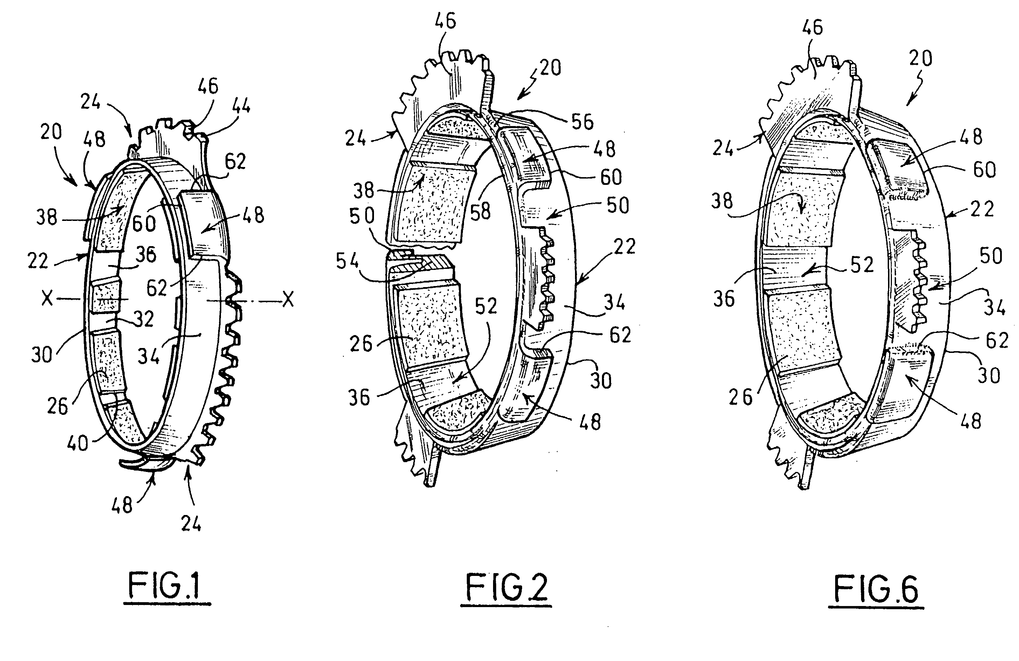

On a représenté à la figure 1 une bague de synchronisation de conception générale connue, notamment du document FR-A-2.751.712 au contenu duquel on pourra se reporter.

Cette bague de synchronisation 20 est constituée pour l'essentiel par une partie de forme générale tronconique 22 qui comporte une surface tronconique de portée 26 et par une partie complémentaire 24 pour l'entraînement en rotation de la bague 20, qui est ici réalisée sous la forme d'un collet radial extérieur.

La bague de synchronisation 20 est constituée pour l'essentiel par un corps de forme générale annulaire tronconique 22 qui est réalisé par formage à partir d'une tôle d'acier, en mettant en oeuvre des techniques de formage, notamment la découpe et l'emboutissage.

Le corps 22 est ainsi de forme générale tronconique, d'axe X-X, et il est délimité axialement par un bord d'extrémité axiale de petit diamètre 30 et par un bord d'extrémité axiale de grand diamètre 32.

Le corps annulaire tronconique 22 est délimité par une face latérale conique externe 34 et par une face latérale conique interne 36.

C'est la face latérale conique interne 36 du corps 22 qui est revêtue d'une couche 38 de matériau de frottement dont la surface périphérique interne tronconique constitue la surface de portée de frottement 26, aussi appelée cône de friction, de la bague de synchronisation 20 et qui est destinée à coopérer avec une surface conique convexe complémentaire, qui est par exemple agencée sur le pignon fou du synchroniseur de boîte de vitesses auquel appartient la bague de synchronisation 20.

La couche de matériau de frottement 38 est par exemple réalisée par surmoulage sur le corps métallique 22, la géométrie précise de la surface de portée tronconique 26 étant obtenue par moulage, c'est-à-dire qu'elle ne dépend pas de la précision de réalisation par formage du corps annulaire 22 qui constitue un insert dans le moule, mais qu'elle dépend uniquement de la précision du moule.

Le matériau de frottement utilisé pour la réalisation du cône de friction 26 doit être un matériau de frottement moulable et susceptible de travailler dans l'huile.

Un tel exemple d'un matériau de frottement et de son procédé d'obtention sont décrits et représentés dans le document WO-A-95/26473.

Afin d'améliorer la tenue de la couche de matériau de frottement moulée sur le corps annulaire en tôle d'acier 22, il est possible de procéder à un dépôt préalable d'une résine sur le corps 22, ou sur le matériau de frottement, avant l'opération de surmoulage.

Le dépôt peut être réalisé par immersion de la pièce métallique dans un bain de résine, par projection de cette dernière sur la surface destinée à être revêtue de la couche du matériau 22, ou par tout autre procédé de dépose, par exemple au rouleau.

Selon un aspect connu des cônes de friction, la surface de portée tronconique concave 26 peut comporter une série de rainures 40 d'orientation sensiblement axiale.

Les rainures 40 sont ici avantageusement réalisées venues de matière par moulage avec la couche de matériau de frottement 38.

La collerette d'entraînement 24 est réalisée venue de matière par découpe et emboutissage avec le corps annulaire tronconique 22 et elle s'étend radialement vers l'extérieur depuis le bord d'extrémité axiale de grand diamètre 32 de ce dernier.

Le bord périphérique 44 de la collerette 24 comporte des dents 46 susceptibles de coopérer avec des dents complémentaires du manchon baladeur du synchroniseur.

Des bossages d'appui et de positionnement axial de la bague de synchronisation 20 sont aussi réalisés venus de matière avec le corps annulaire tronconique 22.

Ces bossages sont ici au nombre de trois et ils sont réalisés sous la forme de pattes 48 qui s'étendent ici depuis le bord d'extrémité axiale de plus grand diamètre 32 du corps annulaire tronconique 22 de la bague de synchronisation 20 et qui sont rabattues sensiblement à 180° pour s'étendre axialement le long de la surface tronconique externe 34 du corps annulaire 22.

Les bossages sont ainsi réalisés par découpe, emboutissage et pliage, c'est-à-dire que leur réalisation ne doit faire appel à aucune opération supplémentaire d'usinage.

La bague de synchronisation 20 illustrée à la figure 1 peut être réalisée à faible coût. Elle présente une masse et une inertie fortement réduites par rapport aux bagues connues de synchronisation à structure massive, et sa réalisation ne nécessite aucune opération d'usinage.

Par ailleurs, comme la dureté de l'acier matricé est supérieure à celle d'un acier fritté ou à celle des laitons utilisés pour la réalisation des bagues de synchronisation massives, il est possible de réduire le nombre des dents 46.

De plus, la réalisation des rainures 40 par moulage permet, si nécessaire, de nombreuses possibilités quant à leurs dimensions et à leurs formes et orientations.

On décrira maintenant les deux modes de réalisation d'une bague de synchronisation conforme aux enseignements de l'invention tels qu'ils sont illustrés aux figures 2 et suivantes.

Conformément aux enseignements de l'invention, le corps annulaire tronconique 22 est réalisé en une seule pièce à partir d'un flanc de tôle et il comporte deux anneaux concentriques ou coaxiaux d'axe X-X parmi lesquels on distingue l'anneau radialement extérieur 50 et l'anneau radialement intérieur 52 qui sont reliés entre eux par un pli d'extrémité axiale 54 à 180° qui définit le bord d'extrémité axiale 30 de plus petit diamètre du corps annulaire tronconique 22.

Ainsi, selon l'invention, la face latérale tronconique externe 34 du corps 22 est la face latérale conique externe de l'anneau extérieur 50 tandis que la face latérale conique interne 36 du corps 22 est la face latérale interne conique de l'anneau intérieur 52.

Le bord d'extrémité axiale de grand diamètre 32 de l'anneau 22 correspond au plan transversal moyen dans lequel s'étendent les bords transversaux d'extrémité axiale de grand diamètre 56 et 58 des anneaux extérieur 50 et intérieur 52 respectivement.

Le corps de forme générale tronconique annulaire 22 présente ainsi une double épaisseur de tôle sur tout son contour circulaire, ce qui confère une grande rigidité à la bague de synchronisation 20.

La collerette radiale 24 pour l'entraînement en rotation de la patte de synchronisation 20 s'étend radialement vers l'extérieur depuis le bord d'extrémité axiale de grand diamètre 56 de l'anneau extérieur 50 en étant réalisée venu de matière par formage et découpe avec cet anneau extérieur 50.

Les pattes, ou bossages, 48 d'appui et de positionnement axial de la bague de synchronisation 20 sont aussi réalisées venues de matière avec l'anneau extérieur 50 du corps annulaire tronconique 22 en s'étendant axialement depuis le bord d'extrémité axiale de grand diamètre 56 de l'anneau extérieur 50 en direction du bord d'extrémité axiale de petit diamètre 30 du corps annulaire tronconique 22, chaque bossage d'appui 48 étant délimité axialement par un bord transversal 60 situé axialement en retrait par rapport au bord d'extrémité axiale 30.

Chaque patte ou bossage d'appui 48 est aussi délimitée angulairement par deux bords latéraux parallèles et opposés 62 d'orientation globalement axiale.

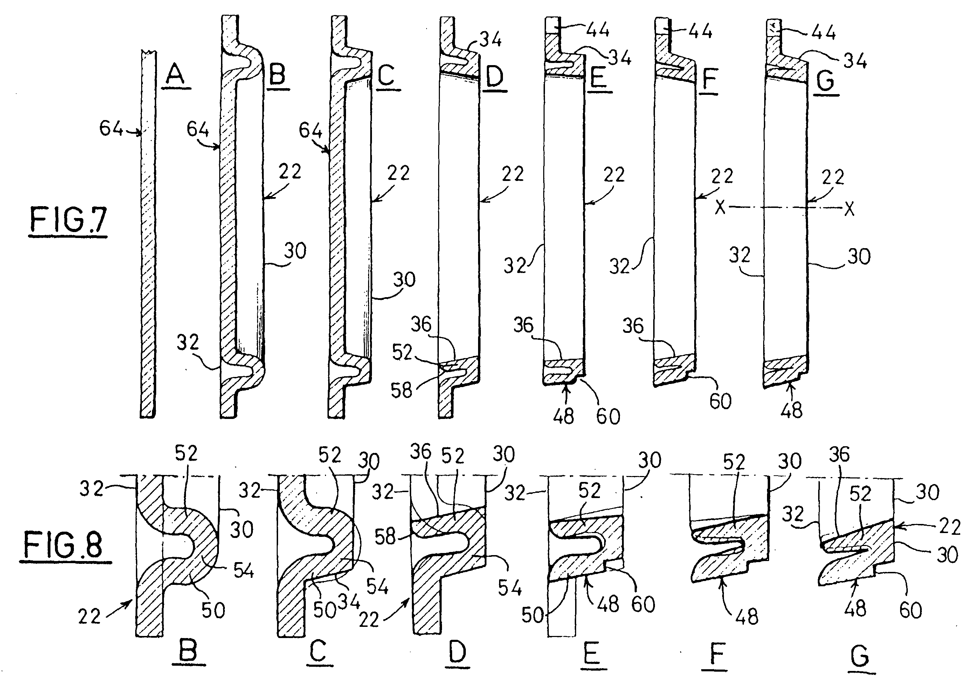

Dans le premier mode de réalisation illustré aux figures 2 à 5, chaque bossage d'appui 48 est réalisé, comme dans l'état de la technique illustré à la figure 1, sous la forme d'une patte en tôle pliée et rabattue axialement tandis que, dans le second mode de réalisation illustré aux figures 6 et suivantes, chaque bossage ou patte d'appui 48 est réalisé sous la forme d'un embouti, radialement extérieur, dans l'anneau extérieur 50 du corps tronconique annulaire en tôle emboutie 22.

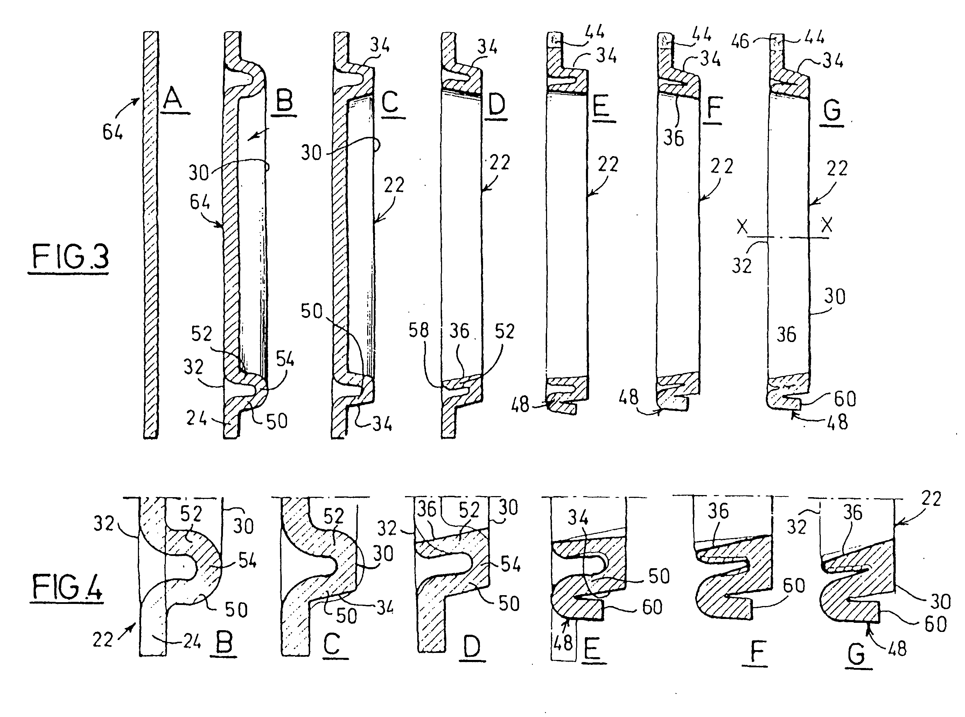

On décrira maintenant le procédé selon l'invention pour la fabrication du premier mode de réalisation de la bague de synchronisation conforme aux enseignements de l'invention en se référant notamment aux figures 3A à 3G et aux figures 4B à 4G.

Sur ces figures, on a représenté en trait fort la forme que revêt successivement le corps 22 au cours des différentes étapes du procédé de fabrication et en trait plus fin la trace de la forme que revêtait le corps à l'étape précédente du procédé de fabrication.

Le procédé de fabrication selon l'invention fait appel à une étape d'emboutissage, selon la direction axiale X-X, profond pour, à partir d'un flanc de tôle 64 (illustré à la figure 3A) en forme de disque circulaire, obtenir la première ébauche du corps 22 représenté aux figures 3B et 4B.

Le flanc 64 est par exemple réalisé au cours d'une première étape de fabrication par découpe à l'emporte-pièce dans une plaque de tôle.

La deuxième étape, d'emboutissage profond, permet de former les anneaux extérieur 50 et intérieur 52 en conservant de plus la collerette radiale extérieure 24 qui s'étend temporairement sur tout le tour du corps 22, notamment afin de permettre de tenir l'ébauche 22 dans une presse (non représentée) d'emboutissage utilisée pour la fabrication du corps 22.

S'agissant d'un emboutissage profond, la deuxième étape d'emboutissage peut être réalisée, si nécessaire, en plusieurs phases successives (non représentées sur les figures).

En partant de l'ébauche 22 représentée aux figures 3B et 4B, le procédé selon l'invention comporte une troisième étape suivante dite de "conformage" au cours de laquelle on forme de manière tronconique la face latérale conique externe 34 appartenant à l'anneau extérieur 50 du corps 22.

Au cours de cette même troisième étape, on met simultanément en forme la face transversale d'extrémité axiale 30 du corps 22 en lui conférant une forme annulaire plane qui s'étend dans un plan transversal perpendiculaire à l'axe X-X.

A l'issue de cette troisième étape, l'ébauche du corps 22 présente la forme illustrée aux figures 3C et 4C.

Une quatrième étape de mise en forme permet 'de conformer de manière tronconique la face latérale conique interne de l'anneau intérieur 52.

Au cours de cette même quatrième étape, on découpe la partie centrale du flanc 64 qui subsistait en formant ainsi le bord d'extrémité axiale de grand diamètre 58 de l'anneau intérieur 52.

A l'issue de la quatrième étape, l'ébauche du corps 22 présente la forme illustrée aux figures 3D et 4D avec ses faces latérales tronconiques externe 34 et interne 36 ayant subi un premier conformage et avec une collerette périphérique 24 complète.

Selon le premier exemple du procédé de fabrication conforme aux enseignements de l'invention, la cinquième étape consiste à réaliser en une seule opération les pattes 48 formant les bossages d'appui.

Ainsi, cette cinquième étape comporte une opération de découpe des pattes 48, afin notamment de réaliser leurs bords axiaux 62, ainsi qu'une opération simultanée de découpe des autres parties de la collerette 24 afin de réaliser les dents 44 pour constituer le pignon d'entraînement du corps 22 de la bague de synchronisation 20.

Outre l'opération de découpe, la cinquième étape comporte une opération de pliage des pattes 48 afin de les amener dans la conformation illustrée aux figures 3E et 4E dans lesquelles elles s'étendent axialement le long de la face latérale tronconique externe 34 des portions en vis-à-vis de l'anneau extérieur 50.

Au cours de ces différentes opérations appartenant à la cinquième étape, les autres formes caractéristiques de l'ébauche 22 peuvent subir de légères modifications.

Ainsi, il peut s'avérer nécessaire de compléter le procédé de fabrication par des étapes supplémentaires de mise à nouveau en forme tronconique précise des faces latérales tronconiques interne 36 et externe 34 de l'ébauche 22.

Dans l'exemple illustré aux figures, les étapes supplémentaires consistent en une sixième étape permettant de réaliser un deuxième conformage intérieur du corps tronconique 22 et en une septième et dernière étape de conformage double, intérieur et extérieur, de manière à aboutir à la forme finale du corps 22 illustré aux figures 3G et 4G.

On décrira maintenant le deuxième exemple du procédé de fabrication selon l'invention pour la fabrication du corps tronconique annulaire 22 du deuxième mode de réalisation de la bague de synchronisation illustrée notamment à la figure 6 selon lequel les bossages d'appui 48 sont réalisés par emboutissage à partir de l'anneau extérieur 50.

Cette deuxième conception de la bague de synchronisation 20 et son procédé de fabrication associé sont particulièrement appropriés lorsque la section transversale de matière constitutive du corps 22 est plus réduite.

Les quatre premières étapes du second procédé de fabrication illustrées aux figures 7A à 7D et 8B à 8D sont identiques à celles décrites précédemment en référence au premier exemple du procédé de fabrication.

A partir de l'ébauche du corps 22 illustrée aux figures 7D et 8D, la cinquième étape du procédé de fabrication consiste à réaliser par emboutissage les bossages 48.

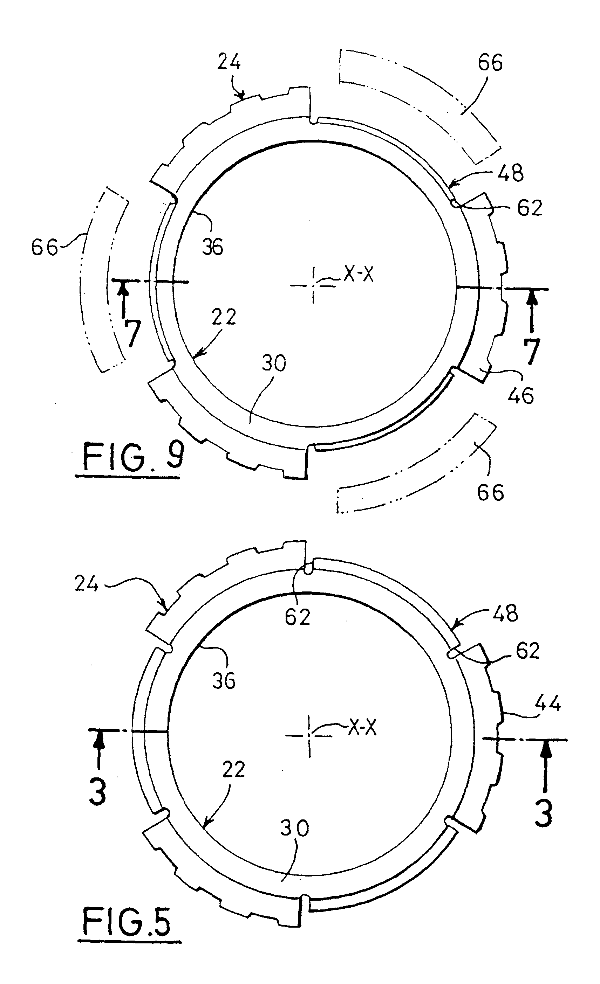

Cette cinquième étape comporte ici aussi une opération de découpe permettant de faire tomber les chutes 66 illustrées en silhouette à la figure 9 pour délimiter circonférentiellement les trois parties restantes de la collerette 24 constituant les moyens d'entraînement en rotation du corps 22.

Dans les trois zones intermédiaires entre les parties restantes de la collerette 24, on forme par emboutissage dans l'épaisseur de l'anneau extérieur 50 les bossages 48 en réalisant simultanément leurs bords d'extrémité axiale 60. Enfin, comme dans le cas du premier procédé de fabrication, il peut être nécessaire de prévoir une sixième et une septième étape supplémentaire de conformage final des faces latérales tronconiques externe 34 et interne 36 du corps 22.

A partir du corps tronconique annulaire 22, la fabrication de la bague de synchronisation 20 comporte bien entendu des étapes, évoquées précédemment, visant à rapporter le matériau de friction 38 sur le corps annulaire tronconique en tôle 22.

L'invention n'est pas limitée aux modes de réalisation qui viennent d'être décrits.

Sans sortir du cadre de l'invention, il est notamment possible de réaliser une bague de synchronisation rigide à cône de friction extérieur, ou à double cône de friction intérieur et extérieur.

## Revendications

1. Bague (20) de synchronisation pour un synchroniseur de boite de vitesses du type comportant un corps (22) de forme générale annulaire tronconique, réalisé par formage d'un flan de tôle, qui délimite au moins une surface de portée tronconique (26) susceptible de coopérer par friction avec une surface de portée complémentaire appartenant à un autre composant, et qui est délimité axialement par deux bords d'extrémités (30, 32), par une face latérale conique externe (34) et par une face latérale conique interne (36), **caractérisée en ce que** le corps annulaire tronconique (22) comporte une double épaisseur de tôle constituée d'un anneau radialement extérieur (50) et d'un anneau radialement intérieur (52) concentriques qui sont reliés ente eux par un pli d'extrémité axiale (54) et **en ce que** la face latérale conique externe (34) du corps (22) est la face latérale externe de l'anneau extérieur (50), tandis que la face latérale conique interne (36) du corps (22) est la face latérale interne conique de l'anneau intérieur (52).

2. Bague de synchronisation selon la revendication précédente, **caractérisée en ce que** les deux anneaux extérieur (50) et intérieur (52) sont reliés entre eux par un pli (54) qui définit le bord d'extrémité axiale (30) de plus petit diamètre du corps annulaire tronconique (22).

3. Bague de synchronisation selon l'une quelconque des revendications précédentes, **caractérisé en ce que** le corps annulaire tronconique (22) comporte au moins une partie fonctionnelle supplémentaire (24, 48), réalisée venue de matière par formage, qui s'étend depuis l'un (32) de ses bords d'extrémités axiales (30, 32).

4. Bague de synchronisation selon la revendication précédente, **caractérisée en ce que** la partie fonctionnelle est une patte (48) d'orientation sensiblement axiale.

5. Bague de synchronisation selon la revendication précédente, **caractérisée en ce que** ladite patte (48) s'étend axialement sensiblement le long de la face latérale tronconique externe (34) du corps (22) pour constituer un bossage, d'appui et de positionnement axial de la bague (20).

6. Bague de synchronisation selon la revendication précédente prise en combinaison avec la revendication 2, **caractérisé en ce que** ladite patte (48) s'étend axialement depuis le bord d'extrémité axiale de plus grand diamètre (56) de l'anneau extérieur (50) du corps annulaire tronconique (22).

7. Bague de synchronisation selon l'une quelconque des revendications précédentes, **caractérisée en ce que** la surface de portée tronconique (26) appartient à une couche (38) de matériau, notamment de matériau de frottement, rapportée sur le corps annulaire tronconique (22).

8. Bague de synchronisation selon la revendication précédente, **caractérisée en ce que** le corps (22) délimite au moins une face latérale tronconique (34, 36) qui est revêtue d'une couche (38) de matériau, d'épaisseur sensiblement constante.

9. Bague de synchronisation selon l'une des revendications 7 ou 8, **caractérisée en ce que** une face latérale tronconique interne (36) de l'anneau intérieur (52) du corps (22) est revêtue d'une couche (38) de matériau.

10. Bague de synchronisation selon la revendication précédente, **caractérisée en ce que** la couche (38) de matériau est réalisée par surmoulage autour du corps en tôle (22).

11. Bague de synchronisation selon l'une quelconque des revendications précédentes, **caractérisée en ce que** ladite surface de portée (26) comporte une série de rainures (40), d'orientation sensiblement axiale, formées par moulage dans l'épaisseur de la couche (38) de matériau.

12. Bague de synchronisation selon l'une quelconque des revendications précédentes, **caractérisée en ce que** ladite partie fonctionnelle est une collerette (24) d'orientation sensiblement radiale.

13. Bague de synchronisation selon la revendication 12, **caractérisée en ce que** la collerette (24) s'étend radialement vers l'extérieur et comporte des dents (46) à sa périphérie (44).

14. Bague de synchronisation selon la revendication précédente prise en combinaison avec la revendication 2, **caractérisée en ce que** la collerette (24) s'étend radialement vers l'extérieur depuis le bord d'extrémité axiale (56) de plus grand diamètre de l'anneau extérieur (50) du corps annulaire tronconique (22).

15. Bague de synchronisation selon l'une quelconque des revendications 7 à 13, **caractérisée en ce que** la couche (38) de matériau est une couche de matériau moulable de frottement susceptible de coopérer avec une surface de frottement en milieu liquide.

16. Bague de synchronisation selon l'une quelconque des revendications 7 à 15, **caractérisée en ce qu'**une couche d'adhésif ou de colle est interposée entre le corps annulaire tronconique (22) et la couche de matériau (38).

17. Procédé de fabrication d'une bague de synchronisation (20) constituée pour l'essentiel par un corps de forme générale annulaire tronconique (22) réalisé par formage à partir d'une tôle d'acier et comprenant une face latérale tronconique externe (34) et une face latérale tronconique interne (36) **caractérisé en ce que** le corps annulaire tronconique (22) est réalisé suivant au moins les étapes successives suivantes :
a) obtention d'un flan de tôle (64) sensiblement plan et de contour extérieur circulaire,
b) emboutissage, selon la direction axiale (X-X) du corps (22), au cours de laquelle on forme simultanément deux anneaux intérieur (52) et extérieur (50) concentriques et un pli d'extrémité axiale (54) qui les relie,
c) mise en forme de la face latérale tronconique externe (34) du corps annulaire tronconique,
d) mise en forme de la face latérale tronconique interne (36) du corps annulaire tronconique,
et **en ce que** la face latérale tronconique interne (36) du corps (22) est ensuite revêtue d'une couche (38) de matériau de frottement.

## Patentansprüche

1. Synchronring (20) für eine Getriebe-Synchronisiereinrichtung, der einen durch Umformen einer Blechscheibe hergestellten Körper (22) mit allgemein kegelstumpfartiger, ringförmiger Form aufweist, der mindestens eine kegelstumpfartige Auflagefläche (26) begrenzt, welche reibschlüssig mit einer zu einem anderen Bauteil gehörenden komplementären Auflagefläche zusammenwirken kann, und der axial durch zwei Endränder (30, 32), durch eine konischen laterale Außenfläche (34) und durch eine konische laterale Innenfläche (36) begrenzt wird, **dadurch gekennzeichnet, dass** der kegelstumpfartige ringförmige Körper (22) eine doppelte Blechdicke aufweist, die aus einem radial äußeren Ring (50) und einem radial inneren Ring (52) besteht, die konzentrisch und durch einen axialen Endfalz (54) miteinander verbunden sind, und dass die konische laterale Außenfläche (34) des Körpers (22) die laterale Außenfläche des Außenrings (50) ist, während die konische laterale Innenfläche (36) des Körpers (22) die konische laterale Innenfläche des Innenrings (52) ist.

2. Synchronring nach dem vorhergehenden Anspruch, **dadurch gekennzeichnet, dass** die beiden Ringe, der Außenring (50) und der Innenring (52), durch einen Falz (54) miteinander verbunden sind, der den axialen Endrand (30) mit kleinerem Durchmesser des kegelstumpfartigen ringförmigen Körpers (22) definiert.

3. Synchronring nach einem der vorhergehenden Ansprüche, **dadurch gekennzeichnet, dass** der kegelstumpfartige ringförmige Körper (22) mindestens ein zusätzliches funktionelles Teil (24, 48) aufweist, das durch Umformen einstückig hergestellt ist und sich von einem (32) seiner axialen Endränder (30, 32) aus erstreckt.

4. Synchronring nach dem vorhergehenden Anspruch, **dadurch gekennzeichnet, dass** es sich bei dem funktionellen Teil um einen Ansatz (48) mit im Wesentlichen axialer Ausrichtung handelt.

5. Synchronring nach dem vorhergehenden Anspruch, **dadurch gekennzeichnet, dass** sich der Ansatz (48) in Axialrichtung im Wesentlichen entlang der kegelstumpfartigen lateralen Außenfläche (34) des Körpers (22) erstreckt, um einen Nocken zur Anlage und axialen Positionierung des Rings (20) zu bilden.

6. Synchronring nach dem vorhergehenden Anspruch in Kombination mit Anspruch 2, **dadurch gekennzeichnet, dass** sich der Ansatz (48) von dem axialen Endrand (56) mit größerem Durchmesser des Außenrings (50) des kegelstumpfartigen ringförmigen Körpers (22) aus axial erstreckt.

7. Synchronring nach einem der vorhergehenden Ansprüche, **dadurch gekennzeichnet, dass** die kegelstumpfartige Auflagefläche (26) zu einer Materialschicht (38), insbesondere aus Reibmaterial, gehört, die am kegelstumpfartigen ringförmigen Körper (22) angebracht ist.

8. Synchronring nach dem vorhergehenden Anspruch, **dadurch gekennzeichnet, dass** der Körper (22) mindestens eine kegelstumpfartige laterale Fläche (34, 36) begrenzt, die mit einer Materialschicht (38) mit einer im Wesentlichen konstanten Dicke überzogen ist.

9. Synchronring nach Anspruch 7 oder 8, **dadurch gekennzeichnet, dass** eine kegelstumpfartige laterale Innenfläche (36) des Innenrings (52) des Körpers (22) mit einer Materialschicht (38) überzogen ist.

10. Synchronring nach dem vorhergehenden Anspruch, **dadurch gekennzeichnet, dass** die Materialschicht (38) durch Aufspritzen um den Blechkörper (22) herum hergestellt ist.

11. Synchronring nach einem der vorhergehenden Ansprüche, **dadurch gekennzeichnet, dass** die Auflagefläche (26) eine Reihe von Nuten (40) mit im Wesentlichen axialer Ausrichtung aufweist, die durch Formen in der Dicke der Materialschicht (38) ausgebildet sind.

12. Synchronring nach einem der vorhergehenden Ansprüche, **dadurch gekennzeichnet, dass** es sich bei dem funktionellen Teil um einen Flansch (24) mit im Wesentlichen radialer Ausrichtung handelt.

13. Synchronring nach Anspruch 12, **dadurch gekennzeichnet, dass** sich der Flansch (24) radial nach außen erstreckt und am Umfang (44) Zähne (46) aufweist.

14. Synchronring nach dem vorhergehenden Anspruch in Kombination mit Anspruch 2, **dadurch gekennzeichnet, dass** sich der Flansch (24) von dem axialen Endrand (56) mit größerem Durchmesser des Außenrings (50) des kegelstumpfartigen ringförmigen Körpers (22) radial nach außen erstreckt.

15. Synchronring nach einem der Ansprüche 7 bis 13, **dadurch gekennzeichnet, dass** es sich bei der Materialschicht (38) um eine Schicht aus formbarem Reibmaterial handelt, die mit einer Reibfläche in einem flüssigen Medium zusammenwirken kann.

16. Synchronring nach einem der Ansprüche 7 bis 15, **dadurch gekennzeichnet, dass** eine Klebstoff- oder Leimschicht zwischen dem kegelstumpfartigen ringförmigen Körper (22) und der Materialschicht (38) angeordnet ist.

17. Verfahren zur Herstellung eines Synchronrings (20), der im Wesentlichen aus einem Körper (22) allgemein ringförmiger kegelstumpfartiger Form besteht, der durch Umformen eines Stahlblechs hergestellt ist und der eine kegelstumpfartige laterale Außenfläche (34) und eine kegelstumpfartige laterale Innenfläche (36) aufweist, **dadurch gekennzeichnet, dass** der kegelstumpfartige ringförmige Körper (22) gemäß mindestens den folgenden aufeinander folgenden Schritten hergestellt ist:
a) Erhalt einer im Wesentlichen ebenen Blechscheibe (64) mit einer kreisförmigen Außenkontur,
b) Tiefziehen in Axialrichtung (X-X) des Körpers (22), während dessen gleichzeitig zwei konzentrische Ringe, ein Innenring (52) und ein Außenring (50), und ein sie verbindender axialer Endfalz (54) gebildet werden,
c) Formgebung der kegelstumpfartigen lateralen Außenfläche (34) des kegelstumpfartigen ringförmigen Körpers,
d) Formgebung der kegelstumpfartigen lateralen Innenfläche (36) des kegelstumpfartigen ringförmigen Körpers,
und dass die kegelstumpfartige laterale Innenfläche (36) des Körpers (22) danach mit einer Reibmaterialschicht (38) überzogen wird.

## Claims

1. A synchronising ring (20) for a gearbox synchroniser, of the type comprising a body (22), of generally annular frusto-conical form fabricated from a flat steel blank and delimiting at least one frusto-conical bearing surface (26) which is adapted to cooperate by friction with a complementary bearing surface of another component, and which is delimited axially by two terminal edges (30, 32), a conical outer side face (34), and a conical inner side face (36), **characterised in that** the frusto-conical annular body (22) comprises a double thickness of steel consisting of an annular, radially outer ring (50) and an annular radially inner ring (52), which are concentric with each other and which are joined together through an axially extending end fold (54), and **in that** the conical outer side face (34) of the body (22) is the outer side face of the outer ring (50), while the conical inner side face (36) of the body (22) is the conical inner side face of the inner ring (52).

2. A synchronising ring according to Claim 1, **characterised in that** the two annular rings, namely the outer ring (50) and inner ring (52), are joined together through a fold (54) which defines the axial terminal edge (30) of the frusto-conical annular body (22) that has the smaller diameter.

3. A synchronising ring according to Claim 1 or Claim 2, **characterised in that** the frusto-conical annular body (22) comprises at least one additional working part (24, 48), formed integrally and extending from one (32) of its axial terminal edges (30, 32).

4. A synchronising ring according to Claim 3, **characterised in that** the working part is a substantially axially oriented lug (48).

5. A synchronising ring according to Claim 4, **characterised in that** the said lug (48) extends axially substantially along the frusto-conical outer side face (34) of the body (22), whereby to constitute a boss, for abutment and axial positioning of the synchronising ring (20).

6. A synchronising ring according to Claim 5 taken in combination with Claim 2, **characterised in that** the said lug (48) extends axially from the axial terminal edge (56) having the larger diameter, of the outer ring (50) of the frusto-conical annular body (22).

7. A synchronising ring according to any one of the preceding Claims, **characterised in that** the frusto-conical bearing surface (26) is part of a layer of material (38), in particular friction material, applied on the frusto-conical annular body (22).

8. A synchronising ring according to Claim 7, **characterised in that** the body (22) defines at least one frusto-conical side face (34, 36) which is coated with a layer (38) of material having a substantially constant thickness.

9. A synchronising ring according to Claim 7 or Claim 8, **characterised in that** a frusto-conical inner side face (36) of the inner ring (52) of the body (22) is coated with a layer (38) of the material.

10. A synchronising ring according to Claim 9, **characterised in that** the layer (38) of material is formed by *in situ* moulding around the fabricated steel body (22).

11. A synchronising ring according to any one of the preceding Claims, **characterised in that** the said bearing surface (26) includes a set of substantially axially oriented grooves (40), which are formed by moulding within the thickness of the layer (38) of material.

12. A synchronising ring according to any one of the preceding Claims, **characterised in that** the said working part is a substantially radially oriented collar element (24).

13. A synchronising ring according to Claim 12, **characterised in that** the collar element (24) extends radially outwards and has teeth (46) at its periphery (44).

14. A synchronising ring according to Claim 13 taken in combination with Claim 2, **characterised in that** the collar element (24) extends radially outwards from the axial terminal edge (56) of larger diameter of the outer ring (50) of the frusto-conical annular body (22).

15. A synchronising ring according to any one of Claims 7 to 13, **characterised in that** the layer of material (38) is a layer of mouldable friction material adapted to cooperate with a friction surface in a liquid medium.

16. A synchronising ring according to any one of Claims 7 to 15, **characterised in that** a layer of adhesive or glue is interposed between the frusto-conical annular body (22) and the layer of material (38).

17. A method of making a synchronising ring (20) consisting essentially of a body (22) of generally annular form fabricated from a flat steel blank and having a frusto-conical outer side face (34) and a frusto-conical inner side face (36), **characterised in that** the frusto-conical annular body (22) is made in at least the following successive steps:
- (a) obtaining a steel blank (64) which is substantially flat and which has a circular outer contour,
- (b) press-forming the body (22) in the axial direction (X-X), in the course of which there are formed, simultaneously, two concentric annular rings, namely an inner ring (52) and an outer ring (50), together with an axial end fold (54) which joins them together,
- (c) forming the frusto-conical outer side face (34) of the frusto-conical annular body, and
- (d) forming the frusto-conical inner side face (36) of the frusto-conical annular body,
and **in that** the frusto-conical inner side face (36) of the body (22) is subsequently coated with a layer (38) of friction material.
